# EUROPÄISCHE PATENTANMELDUNG

(11) **EP 1 104 205 A1**
(43) Veröffentlichungstag der Anmeldung: **30.05.2001**
(21) Anmeldenummer: 99123208.3
(22) Anmeldetag: 25.11.1999
(51) Int. Cl.: H04Q 3/545

(54) **Verfahren zur optimierten Verarbeitung von ausserhalb einer Vermittlungsstelle geführten Verbindungen**

(71) Anmelder: SIEMENS AKTIENGESELLSCHAFT, 80333 München (DE)
(72) Erfinder: Loebig, Norbert, Dr.rer.nat., 64291 Darmstadt (DE); Eltschka, Herwig, Dipl.-Ing., 82319 Starnberg (DE)

(57) **Zusammenfassung**

Verfahren zur optimierten Verarbeitung von außerhalb einer Vermittlungsstelle geführten Verbindungen in peripheren Einrichtungen eines Vermittlungssytems, die keine HW-orientierten Aufgaben für ihre vermittlungstechnisch zugeordnete peripheren Einrichtungen bereitstellen,dadurch gekennzeichnet, daß das Betriebsystem der peripheren Einrichtung sowie die hierauf ablaufende Sicherungstechnik eine quasi-parallele Verarbeitung einer Mehrzahl von virtuellen peripheren Einrichtungen erlauben, wobei jede virtuelle periphere Einrichtung mittels einer eigenen logischen Adresse über die Nachrichtenschnittstelle der physikalisch zugeordneten peripheren Einrichtung angesprochen werden kann.

## Beschreibung

Die Erfindung betrifft ein Verfahren gemäß dem Oberbegriff von Patentanspruch 1.

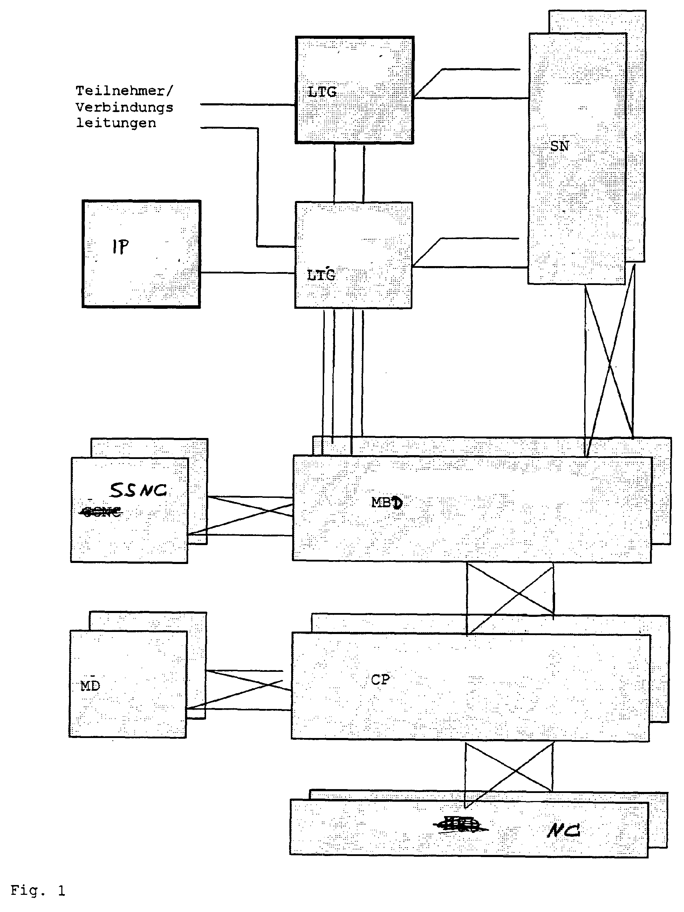

Ein Vermittlungsknoten weist beim Stand der Technik periphere Einrichtungen (Anschlußeinrichtungen für Teilnehmer oder Leitungen), eine zentrale Rechnerplattform, eine Nach-richtenverteileinrichtung und weitere, zentrale Einheiten (Koppelfeld, Protokollabschlußeinrichtungen (z. B. #7), Hintergrundspeicher, Bedieneinrichtungen) auf. Die entsprechenden Verhältnisse sind in Fig. 1 wiedergegeben.

Die peripheren Einrichtungen erfüllen wesentliche, an die Sprachkanäle der peripheren Einrichtung gebundene vermitt-lungstechnische Aufgaben. Sie enthalten daher vermittlungs-technische, betriebstechnische und administrative Programme sowie die der Einrichtung zugehörigen Dateninformationen wie Anschlußlage, Signalisierung, Berechtigungen, Rufnummern, individuelle Charakteristika von Verbindungsleitungen und Teil-nehmeranschlüssen sowie Ausbauzustand und Konfiguration der peripheren Einrichtung.

Die zentrale Rechnerplattform dient der koordinierenden Steuerung des Verbindungsauf- und -abbaus sowie der Reaktionen auf administrative und fehlerbedingte Konfigurationsverän-derungen.

Die peripheren Einrichtungen sind über das Nachrichtenverteilsystem untereinander und mit der gemeinsamen Rechnerplattform verbunden. Die weiteren zentralen Systemkomponenten stellen dem Vermittlungssystem Spezialfunktionen z. B. für die Durchschaltung der Sprachkanäle, die Bearbeitung der Sig-nalsierungsprotokolle, die Realisierung der Betreiber-schnittstelle oder die Speicherung von Massendaten zur Verfügung.

Aus Gründen der Ausfallsicherheit sind die zentralen Komponenten eines Vermittlungssystems redundant (z.B. gedoppelt) ausgelegt. Die peripheren Einrichtungen können nicht redundant sein oder im Falle von verschärften Ausfallanforderungen (z. B. Retten stabiler Verbindungen über den Ausfall einer peripheren Einrichtung hinaus) Redundanz besitzen.

Die Leistungsfähigkeit der peripheren Einrichtungen wird durch die Leistungsfähigkeit der Prozessoren der peripheren Einrichtung bestimmt. Weiterhin ist zur Beurteilung der Leistungsfähigkeit der peripheren Einrichtungen die Größe der vermittlungstechnisch nutzbaren Pools an Konferenzpunkten, Tongeneratoren und DTMF-Empfänger sowie die Kapazität der Protokollabschlußeinrichtung (HDLC Ports und Nachrichten-durchsatz) wesentlich. Ferner sind die Anzahl der terminierten Leitungen pro peripherer Einrichtung, die Nachrichtenschnittstelle für Signalisierungsnachrichten (DSS1/ ISUP) und Paketdaten auf dem D-Kanal, die interne Schnittstelle zum Nachrichtenverteilsystem sowie die Größe des Datenspeichers ein wesentlicher Faktor.

Werden Signalisierung und Sprache disassoziiert auf getrennten Wegen geführt und haben die peripheren Einrichtungen nur noch die Aufgabe der Protokollverarbeitung und/oder -konversion ohne physikalische Terminierung der Sprachkanäle, so entfallen die Beschränkungen der peripheren Einrichtungen hinsichtlich Ressourcen-Pool und Anzahl terminierbarer Sprachkanäle. Die periphere Einrichtung wird für diesen Anwendungsfall hinsichtlich ihrer Kapazität bestimmt durch die Leistungsfähigkeit der Prozessoren, die Größe des Speichers und die Kapazität der Nachrichtenschnittstelle.

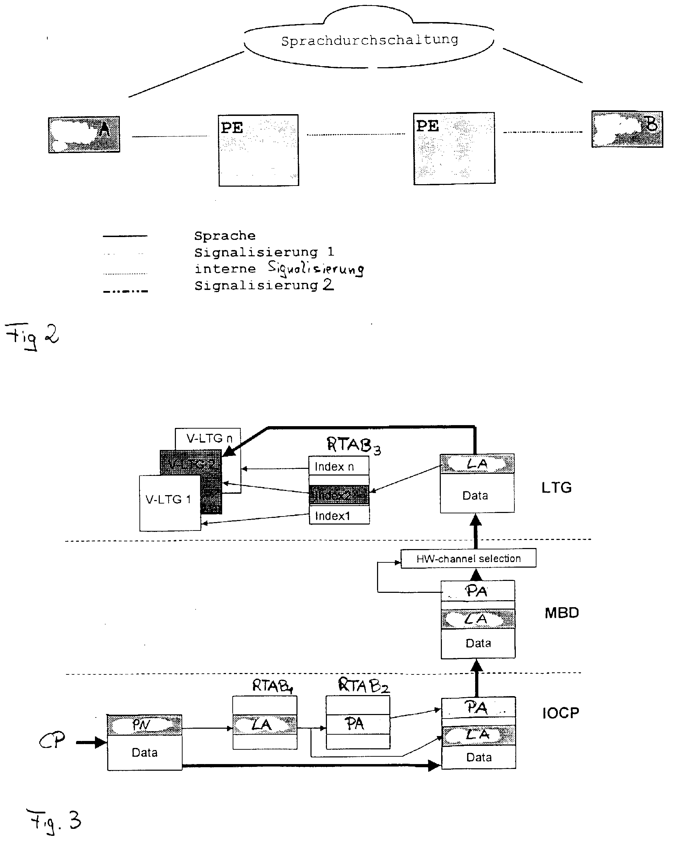

Da für die Durchschaltung der Sprache zwischen dem A-Teil-nehmer und einem beliebigen B-Teilnehmer mehr als eine Richtung zur Verfügung gestellt werden muß, sind i. a. stets zwei verschiedene periphere Einrichtungen PE am Verbindungsauf-und -abbau beteiligt (Fig. 2).

Die periphere Einrichtung des Standes der Technik terminiert genau die Verbindungsleitungen, für deren vermittlungstech-nische Bearbeitung sie zuständig ist. Üblicherweise finden sich periphere Einrichtungen zur Terminierung von n PCM30-Strecken (z. B. n = 4 für 120 Verbindungsleitungen). Im vorliegenden Anwendungsfall, in dem die Sprache außerhalb der peripheren Einrichtung geführt ist, entfällt die Beschränkung auf die physikalisch bestimmte maximale Anzahl terminierbarer Verbindungsleitungen. Für diesen Einsatzfall kann eine periphere Einrichtung z. B. mehr als 120 Verbindungen gleichzeitig bearbeiten.

Ohne Anpassung der Software der Vermittungsstelle kann die periphere Einrichtung auch für den voranstehend genannten Einsatzfall nur die durch physikalische Terminierung bestimmte maximale Anzahl von gleichzeitigen Verbindungen bearbeiten. Im Hinblick auf eine Optimierung für den genannten Einsatzfall hat eine einfache Erhöhung der pro peripherer Einrichtung bearbeitbarer Verbindungen Rückwirkungen auf alle Einrichtungen des Vermittlunssystems bis hin zu Ein- und-Ausgabeoperationen. Auf Grund des entstehenden großen Änder-ungsaufwands ist dies eine zwar strukturell saubere, aber unwirtschaftliche Vorgehensweise.

Damit stellt sich folgendes technische Problem:

Wie kann eine periphere Einrichtung, die zur Signalisierungs-konvertierung genutzt wird, hinsichtlich ihrer Leistungsfähigkeit, ihres Speichers und ihrer Nachrichtenschnittstelle optimal genutzt werden, so daß insbesondere die Beschränkungen durch den pro peripherer Einrichtung vohandenen Pool von Hardware-Ressourcen keine Rolle spielen, daß die Software-An-derungsaufwendungen im Vermittlungssystem minimal werden,
die internen Schnittstellen zu anderen Einrichtungen des Vermittlungssystems nicht betroffen sind, daß das Ausfallver-halten des Gesamtsystems bei Ausfall einer peripheren Einrichtung im genannten Anwendungsfall nicht verschlechtert wird und daß durch Ausfall der peripheren Einrichtung keine Anschlüsse / Teilnehmer bis zu ihrer Wiederinbetriebnahme der peripheren Einrichtung ausfallen.

Periphere Einrichtungen haben bei diesem Stand der Technik stets HW-Bezug. Sie sind die Einheiten, welche Verbindungsleitungen zu Teilnehmeranschlußkonzentratoren und Teilnehmer-anschlußleitungen physikalisch terminieren. Sollen nur Sig-nalisierungsprotokolle abgeschlossen oder konvertiert werden, so erfolgt dies auf Einrichtungen ohne physikalischen Leit-ungsbezug. Derartige allgemeiner nutzbare Einrichtungen sind zumeist zentraler Bestandteil des Vermittlungssystems, wobei i. a. Redundanz zur Erreichung der notwendigen Ausfallsicherheit vorgesehen ist.

Problematisch an dieser Vorgehensweise ist, daß die in der peripheren Einrichtung vorgesehene Terminierungs-Hardware und die in der peripheren Einrichtung zur Verfügung gestellten vermittlungstechnischen Ressourcen ungenutzt bleiben, wenn diese peripheren Einrichtung zur vermittlungstechnischen Behandlung von nicht tatsächlich in der Vermittlungsstelle geführten Sprachkanälen benutzt werden. Ferner bleiben ohne umfangreiche Softwareanpassungen die aus der klassischen Anwendung erwachsenden Restriktionen erhalten, z. B. Durchschaltung von nicht mehr als der maximalen Anzahl von im klassischen Anwendungsfall terminierbaren Verbindungsleitungen. Hierdurch ist die periphere Einrichtung für außerhalb der Vermittlungsstelle geführte Verbindungen suboptimal. Sollen die für reine Protokollanwendungen genutzten zentralen Einrichtungen der Vermittlungsstelle für den genannten neuen Anwendungsfall genutzt werden, so muß die vermittlungstechni-sche Software der peripheren Einrichtungen auf diese portiert werden. Das bedeutet erhebliche Software-Änderungen, was im Hinblick auf die Menge der zu portierenden Programme kostenintensiv und damit problematisch ist.

In der deutschen Patentanmeldung 96108175.9 wird ein Verfahren zum Software Upgrade peripherer Einrichtungen im laufenden Betrieb vorgeschlagen. Das bekannte Verfahren eröffnet die Möglichkeit der gleichzeitigen Ausführung zweier unterschiedlicher Software-Programme auf der gleichen physikalischen peripheren Einrichtung, wobei jeweils nur eines der beiden Programme Zugriff zur Hardware der peripheren Einrichtung hat. Diese Funktionalität steht allerdings nicht für den laufenden Betrieb, sondern nur für den Zeitraum des eigentlichen Software-Austausches zur Verfügung.

Der Erfindung liegt die Aufgabe zugrunde, einen Weg aufzuzeigen, wie periphere Einrichtungen zur vermittlungstechnischen Behandlung von nicht tatsächlich in der Vermittlungsstelle geführten Sprachkanälen bei optimaler Nutzung der vermittlungstechnischen Ressourcen auszubilden sind.

Die Erfindung wird ausgehend vom Oberbegriff von Patentanspruch 1 durch die im kennzeichnenden Teil angegebenen Merkmale gelöst.

Vorteilhaft an der Erfindung ist insbesondere, daß das in den peripheren Einrichtungen geführte Betriebsystem sowie die jeweils zugeordnete Sicherungstechnik eine quasi-parallele Verarbeitung von n virtuellen peripheren Einrichtungen gestatten, wobei jede virtuelle periphere Einrichtung mittels einer eigenen logischen Adresse über die Nachrichtenschnittstelle der physikalisch zugeordneten peripheren Einrichtung angesprochen werden kann.

Vorteilhafte Weiterbildungen der Erfindung sind in den Unteransprüchen angegeben.
Die Erfindung wird im folgenden anhand eines figürlich dargestellten Ausführungsbeispieles näher erläutert.

Es zeigen:
- Fig 1: die typische Architektur eines Vermittlungssystems mit ungedoppelten peripheren Anschlußeinheiten,
- Fig 2: getrennte Wege von Sprache und Signalisierung zwischen 2 Teilnehmern A, B,
- Fig 3: das Routen einer Nachricht von der zentralen Steuereinrichtung CP zu einer virtuellen peripheren Einrichtung V-LTG 2,
- Fig 4: das Routen einer Nachricht von einer virtuellen peripheren Einrichtung V-LTG 2 zu der zentralen Steuereinrichtung CP,
- Fig 5: die Verhältnisse im Nachrichtenverteiler MBD.

In Fig. 1 ist die typische Struktur eines Vermittlungssystems aufgezeigt. Demgemäß sind periphere Einrichtungen LTG, eine zentrale Rechnerplattform CP, eine Nachrichtenverteilein-richtung MBD und weitere, zentrale Einheiten (Koppelfeld SN, Protokollabschlußeinrichtungen (z. B. SSNC), Hintergrundspeicher MD, Bedieneinrichtungen NC, Intelligent Peripherals IP) offenbart.

In Fig. 2 sind die Wege für Sprach - und Signalisierungsinformationen zwischen 2 Teilnehmern A,B aufgezeigt. Dabei werden Sprach - und Signalisierungsinformationen über unterschiedliche Wege geleitet. In den für die Signalisierungsinformationen vorgesehenen Weg sind 2 periphere Einrichtungen PE eines Vermittlungssystems eingefügt.

Das auf der peripheren Einrichtung laufende Betriebssystem sowie die hardwarenahen sicherungstechnischen Programme der peripheren Einrichtung werden erfindungsgemäß derart geändert, daß sie die Unterstützung von n virtuellen peripheren Einrichtungen, welche auf der gleichen Hardwarebasis aktiv sind, unterstützen. Dies kann beispielsweise mittels verall-gemeinertem Taskwechsel erfolgen, der durch den virtuellen peripheren Einrichtungen zugeordnete Deskriptor-Tabellen oder Paging Tabellen unterstützt wird.

Es wird insbesondere ein zentrales Programm zur Verteilung der Nachrichten vorgesehen, welche eine real vorhandene periphere Einrichtung erreichen. Dieses hat die Funktion der Weiterverteilung von Nachrichten an die auf einer physikalischen peripheren Einrichtung laufenden virtuellen peripheren Einrichtungen anhand ihrer logischen Adressen. Jede virtuelle periphere Einrichtung hat eine im Vermittlungssystem eindeutige logische Adresse, welche der Adresse einer real existierenden peripheren Einrichtung gleichwertig ist. Damit kann jede Einheit im Vermittlungssystem eine virtuelle periphere Einrichtung ohne Rückwirkung im System adressieren.

Auf der gleichen physikalischen peripheren Einrichtung laufende virtuelle periphere Einrichtungen benutzen das gleiche Interface zum Nachrichtenverteilsystem. Die Zuordnung zwischen virtueller peripherer Einrichtung und hardwaremäßig vorhandener peripherer Einrichtung erfolgt auf administrati-vem Wege.

Das Nachrichtenverteilsystem ist derart angepaßt, daß es die Adressierung verschiedener logischer peripherer Einrichtungen über den gleichen Nachrichtenkanal unterstützt. Dies bedeutet, das Nachrichtenverteilsystem findet auf Grund der logischen Adresse der virtuellen peripheren Einrichtungen den physikalischen Nachrichtenkanal, über den die Ausgabe erfolgen soll. Damit die Nachricht in der peripheren Einrichtung an die richtige virtuelle periphere Einrichtung zugestellt werden kann, wird die logische Zieladresse als Teil des Nach-richten-Headers mitübertragen und in dem schon genannten zentralen Programmanteil der peripheren Einrichtung zur Weiterverteilung an die adressierte virtuelle periphere Einrichtung herangezogen.

Die Sicherungstechnik der peripheren Einrichtung mit virtuellen Anteilen wird derart angepaßt, daß der Ausfall bzw. die Wiederverfügbarkeit einer peripheren Einrichtung besonders einfach wird:

Fällt die Hardware der peripheren Einrichtung aus, so führt dies zum Ausfall aller auf dieser Einrichtung laufenden virtuellen Einrichtungen. Geht die Hardware nach dem Neuladen der Software oder nach einer Reparatur wieder in Betrieb, führt dies zur Wiederverfügbarkeit der Funktionen der zugehörigen virtuellen peripheren Einrichtungen. Aus Einfach-heitsgründen kann der durch Software-Fehler hervorgerufene temporäre Ausfall einer virtuellen peripheren Einrichtung ebenfalls auf die temporäre Nichtverfügbarkeit aller auf der zugeordneten peripheren Einrichtung laufender virtueller peripheren Einrichtungen abgebildet werden. Dies bedeutet, daß der von einer virtuellen peripheren Einrichtung erkannte und gemeldete Programmdefekt im einfachsten Fall zur Außerbe-triebnahme der gesamten peripheren Einrichtung und zur automatischen Wiederinbetriebnahme nach Neuladen der periphen Einrichtung führt.

Das Ladeprogramm zum Laden von Programm- und Datenanteilen vom Hintergrundspeicher in die periphere Einrichtung wird derart angepaßt, daß ein selektives Laden aller Daten der einer peripheren Einrichtung zugeordneten virtuellen peripheren Einrichtungen über den gleichen physikalischen Kanal ermöglicht wird. Ist das Programm aller virtuellen peripheren Einrichtungen auf einer physikalischen peripheren Einrichtung identisch, so kann zur Optimierung auf das mehrmalige Laden des gleicher Programmanteile verzichtet werden.

Die Anzahl der auf einer peripheren Einrichtung ablauffähigen virtuellen peripheren Einrichtungen wird bestimmt aus der Performanz der auf der peripheren Einrichtung eingesetzten Prozessoren, der Speichergröße und der Leistungsfähigkeit der Nachrichtenschnittstelle zum Restsystem. Ist insbesondere die Schnittstelle zum Nachrichtenverteilsystem nicht leistungsfähig genug, so können zusätzliche, das Nachrichtenverteilsystem entlastende bzw. umgehende Nachrichtenwege zwischen peripheren Einrichtungen und weiteren Einrichtungen des Ver-mittlungssytems geschaltet werden.

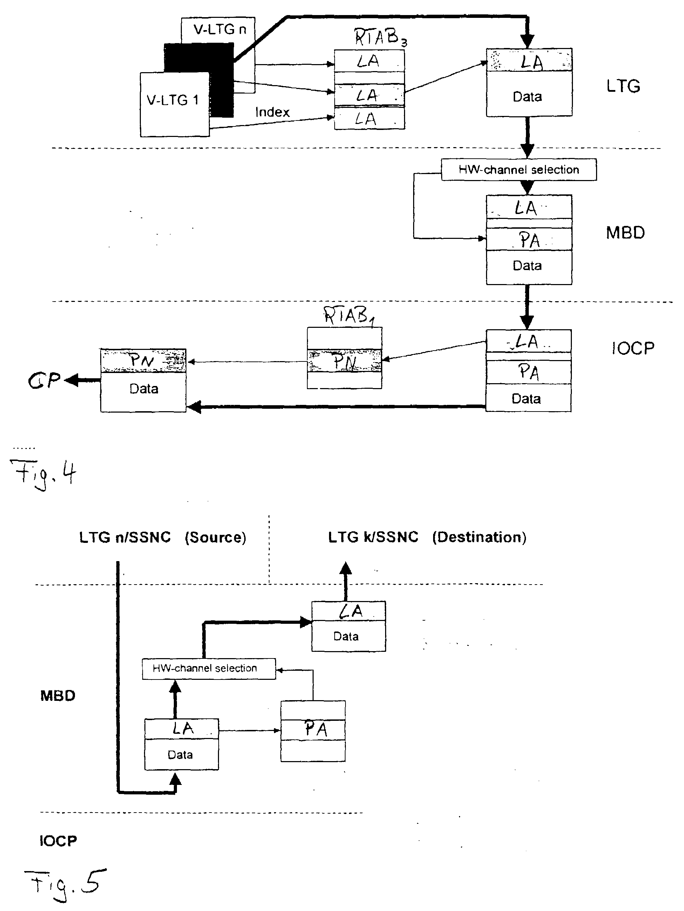

Ein permanenter HW Ausfall einer peripheren Einrichtung führt zum Laden einer als Reserve vorgehaltenen peripheren Einrichtung mit den Daten der betroffenen virtuellen peripheren Einrichtungen, zur Aktualisierung der im Nachrichtenverteilsystem vorhandenen Tabellen für die Zuordnung der Adressen der virtuellen peripheren Einrichtungen zu den physikalischen Nachrichtenkanälen, über welche sie erreichbar sind, sowie zur automatischen Wiederinbetreibnahme der vormals der ausgefallenen peripheren Einrichtung zugeordneten virtuellen peripheren Einrichtungen. (Ein entsprechendes Routing- Bild des Nachrichtenverteilsystems des Vermittlungssystems EWSD zeigen Figur 3, Figur 4 und Figur 5.) Mit der Schaffung von Redundanz und Aktivierung der betroffenen virtuellen peripheren Einrichtungen auf einer anderen peripheren Einrichtung wird die dauerhafte Nichtverfügbarkeit von Teilnehmern und Verbindungsleitungen vermieden.

Die HW Struktur der peripheren Einrichtungen insbesondere die Zahl der von einer Einrichtung terminierten Sprachkanäle hat starken Einfluß auf die Struktur der vermittlungsbezogenen Datenbasis und der Bearbeitungs SW. Durch Steigerung der Leistungsfähigkeit der Prozessoren sowie durch Verkleinerung der Abmessungen der die Sprachkanäle abschließenden HW ist es möglich, in einer peripheren Einrichtung auf gleichem Platz ein Mehrfaches an Vermittlungskapazität für außerhaib der Vermittlungsstelle geführte Verbindungen bereitstellen.

Das dargestellte Verfahren kann dazu dienen, solche Verdichtungen für die im System laufende Anwender SW unsichtbar zu machen, indem mehrere virtuelle Einrichtungen bisheriger Struktur und Sprachkanalzahl auf einer tatsächlich existierenden Einrichtung zur Verfügung gestellt erscheinen.

In Fig. 3 ist beispielhaft aufgezeigt, wie in einem Kommunikationssystem eine Nachricht von der zentralen Steuereinrichtung CP einer virtuellen peripheren Einrichtung V-LTG 2 übergeben wird. Demgemäß wird ein Block mit Nachrichten DATA sowie einer Prozessornummer PN ausgesandt. Bei letzterer handelt es sich um eine Nummer, die in Routingtabellen RTAB₁, RTAB₂ in eine logische bzw. physikalische Adresse umgesetzt wird. Während erstere die virtuelle periphere Einrichtung bezeichnet, wird die dieser zugeordnete physikalische periphere Einrichtung durch die physikalische Adresse adressiert. Die Nachrichten DATA, die logische Adresse LA sowie die physikalische Adresse PA werden zusammen über die Ein-/Ausgabeeinrichtung IOCP der zentralen Steuereinrichtung CP dem Nachrichtenverteiler MBD übergeben.

Im Nachrichtenverteiler MBD wird nun geprüft, in welchem Hardwarekanal der empfangene Datenblock der in Frage kommenden physikalischen peripheren Einrichtung LTG zugeführt wird (HW-channel selection). Diese physikalische periphere Einrichtung LTG übernimmt den Datenblock, wobei das Betriebssystem eine Bewertung der logischen Adresse durchführt. In einer weiteren Routingtabelle RTAB₃ wird die empfangene (lange) logische Adresse LA in eine kurze Indexzahl umgesetzt. Gemäß vorliegendem Ausführungsbeispiel soll dies die Indexzahl Index2 sein, womit die virtuelle periphere Einrichtung V-LTG 2 adressiert wird.

In Fig. 4 ist aufgezeigt, wie in einem Kommunikationssystem Nachrichten von einer virtuellen peripheren Einrichtung (z.B. V-LTG 2) einer zentralen Steuereinrichtung CP zugeführt werden. Die virtuelle periphere Einrichtung V-LTG 2 generiert einen Block mit Nachrichten DATA und einer der virtuellen peripheren Einrichtung V-LTG 2 entsprechenden Nummer Index2. Letztere wird in der Routingtabelle RTAB₃ in eine (lange) logische Quelladresse LA umgesetzt. Der Block wird nun dem Nachrichtenverteiler MBD in einem Hardwarekanal zugeführt, über den die physikalische Quelladresse PA ermittelt wird. Nachrichten DATA, logische Adresse LA und physikalische Adresse PA werden im folgenden der Ein-/Ausgabeeinrichtung IOCP der zentralen Steuereinrichtung CP übergeben. Die Routingtabelle RTAB₁ wandelt die logische Quelladresse LA in die für die Steuereinrichtung CP charakteristische Prozessornummer PN um.

In Fig. 5 sind die Verhältnisse im Nachrichtenverteiler MBD aufgezeigt. Hierbei wird vorgesehen, daß virtuelle periphere Einrichtungen V-LTGₙ, V-LTGₖ Nachrichten untereinander austauschen. Alternativ können auch Nachrichten zwischen einer virtuellen peripheren Einrichtung V-LTGₙ, V-LTGₖ und dem zentralen Zeichenkanal SSNC ausgetauscht werden. Der Nach-richtenblock wird vom Nachrichtenverteiler MBD von einer Quelle (SOURCE) entgegengenommen. Hierin sind Nachrichten DATA und eine logische Zieladresse LA enthalten. Aufgrund dieser Zieladresse LA wird mithilfe einer im Nachrichtenverteiler MBD befindlichen Routingtabelle die physikalische Zieladresse PA bestimmt. Über die physikalische Zieladresse PA wird die Hardware-channel selection zur Ausgabe des die logische Zieladresse enthaltenden Datenblockes zu einer Senke (DESTINATION) angesteuert. Mit der physikalischen Adresse PA wird somit der zuständige physikalische Messagechannel ermittelt und zur Ziel LTG oder zum SSNC (DESTINATION) verzweigt.

## Patentansprüche

1. Verfahren zur optimierten Verarbeitung von außerhalb einer Vermittlungsstelle geführten Verbindungen in peripheren Einrichtungen eines Vermittlungssytems, die keine HW-orientierten Aufgaben für ihre vermittlungstechnisch zugeordnete peripheren Einrichtungen bereitstellen,
**dadurch gekennzeichnet**,
daß das Betriebsystem der peripheren Einrichtung sowie die hierauf ablaufende Sicherungstechnik eine quasi-parallele Verarbeitung einer Mehrzahl von virtuellen peripheren Einrichtungen erlauben, wobei jede virtuelle periphere Einrichtung mittels einer eigenen logischen Adresse über die Nachrichtenschnittstelle der physikalisch zugeordneten peripheren Einrichtung angesprochen werden kann.

2. Verfahren nach Anspruch 1,
**dadurch gekennzeichnet**,
daß die Nachrichtenverteilung innerhalb der peripheren Einrichtung durch einen zentralen Betriebssytemanteil auf Basis der über das Nachrichtenverteilsystem mitgelieferten Zieladresse einer virtuellen peripheren Einrichtung erfolgt.

3. Verfahren nach Anspruch 1, 2,
**dadurch gekennzeichnet**,
daß die Verteilung der Nachrichten an virtuelle periphere Einrichtungen über flexibel ladbare Routingtabellen des Nachrichtenverteilsystems erfolgen.

4. Verfahren nach Anspruch 1 bis 3,
**dadurch h gekennzeichnet**,
daß die Anzahl der virtuellen peripheren Einrichtungen pro peripherer Einrichtung administrierbar in Abhängigkeit von Performanz, Nachrichtenschnittstelle, Speicherausbau und Anwendung festgelegt wird.

5. Verfahren nach Anspruch 1 bis 4,
**dadurch gekennzeichnet**,
daß das Laden von Software in eine virtuelle periphere Einrichtung über den gleichen physikalischen Nachrichtenkanal der zugeordneten peripheren Einrichtung unterstützt wird.

6. Verfahren nach einem der vorstehenden Ansprüche,
**dadurch gekennzeichnet**,
daß im Falle eines dauerhaften Totalausfalls einer peripheren Einrichtung eine vorgehaltene periphere Einrichtung nach Aktualisierung der Routing-Tabellen des Nachrichtenverteilsystems mit dem Programm und den Daten der ausgefallenen virtuellen peripheren Einrichtungen geladen wird und automatisch ohne Rückwirkung auf die weiteren Einrichtungen des Vermittlungssystems in Betrieb geht.

7. Verfahren nach einem der vorstehenden Ansprüche,
**dadurch gekennzeichnet**,
daß stabile Verbindungen für gedoppelt ausgelegte periphere Einrichtungen oder 1:1 redundante ungedoppelte peripheren Einrichtungen gerettet werden, wobei die mitlaufende Aktualisierung der vermittlungstechnischen Datenspeicher und Zustände der virtuellen peripheren Einrichtungen der redundanten Einheit per logischem oder physikalisch in der peripheren Einrichtung verhandenem Aktualisierungskanal erfolgt.
